# EUROPEAN PATENT APPLICATION

(11) **EP 4 230 499 A1**
(43) Date of publication of application: **23.08.2023**
(21) Application number: 23155437.9
(22) Date of filing: 07.02.2023
(51) Int. Cl.: B61L 23/04

(54) **METHOD FOR DETECTING RAIL FRACTURE USING IMAGE TRANSFORMATION OF VIBRATION DATA MEASURED BY DISTRIBUTED ACOUSTIC SENSING TECHNOLOGY**

(30) Priority: 16.02.2022 KR 20220020214
(71) Applicant: Korea Railroad Research Institute, Uiwang-si, Gyeonggi-do 16105 (KR)
(72) Inventor: KIM, Jungtai, 16080 Gyeonggi-do (KR); YOON, Yongki, 16517 Gyeonggi-do (KR); KIM, Yongkyu, 31156 Chungcheongnam-do (KR); KO, Kyeongjun, 07365 Seoul (KR); KIM, Seongjin, 17106 Gyeonggi-do (KR); PARK, Chankyoung, 16413 Gyeonggi-do (KR); JEONG, Raggyo, 04170 Seoul (KR); CHUN, Hyeyeun, 16080 Gyeonggi-do (KR)
(74) Representative: Lewis Silkin LLP

(57) **Abstract**

In a method for detecting rail fracture, vibration data generated according to train operation is inputted, and the vibration data is collected using a distributed acoustic sensing (DAS) system. The inputted vibration data is imaged into the relationship between time and frequency. The imaged image is learned. Rail fracture of train is decided from the imaged vibration data, based on the learning.

## Description

This application claims priority under 35 U.S.C. § 119 to Korean Patent Application No. 10-2022-0020214, filed on February 16, 2022, the disclosure of which is incorporated by reference herein in its entirety.

### BACKGROUND

### 1. Field of Disclosure

The present disclosure of invention relates to a method for detecting rail fracture, and more specifically the present disclosure of invention relates to a method for detecting rail fracture using image transformation of vibration data measured by distributed acoustic sensing technology, in which noise and vibration data generated during train operation are converted into images and the rail fracture is determined by performing learning based on the converted images.

### 2. Description of Related Technology

Accurate location detection of trains is essential for proper train operation control and safety assurance, and conventionally, a method of checking the occupancy of a train using a track circuit and detecting the location of the train in block units has been used. Here, it has been using the feature that a difference in current flow occurs depending on whether the train is occupied through an electrical signal.

However, in the conventional method, the position is not detected accurately, and costs for maintenance is high, and thus technology of transmitting location information through communication was applied instead of using track circuits. Here, in case of using the communication, an auxiliary location detection means is necessary in case the communication is cut off, and it is difficult to determine the positon of the rear end of the train accurately when the length of the train is variable such as a freight train.

Thus, Korean patent No. 10-1228349 discloses the technology in which sound waves, ultrasonic waves, or lasers are provided from one side of the rail block and received from the other side to determine whether or not there is damage. However, in this technology, installation and maintenance are difficult since the transceiver should be directly attached to the rail.

Further, Korean patent No. 10-2209844 and Korean laid-open patent No. 10-2021-0138283 disclose a technology of determining the rail fracture using distributed acoustic sensing (DAS) and in some cases, DAS technology is applied to the field of rolling stock. However, it is difficult to make continuous or global comparisons of changes in vibration as trains approach, and a technology of increasing the accuracy of rail fracture or breakage decision is required.

### SUMMARY

The present invention is developed to solve the above-mentioned problems of the related arts. The present invention provides a method for detecting rail fracture using image transformation of vibration data measured by distributed acoustic sensing technology, in which noise and vibration data generated during train operation are converted into images and the rail fracture is determined by performing learning based on the converted images, capable of increasing the accuracy of the decision and increasing the speed of the decision.

According to an example embodiment, in the method for detecting rail fracture, vibration data generated according to train operation is inputted, and the vibration data is collected using a distributed acoustic sensing (DAS) system. The inputted vibration data is imaged into the relationship between time and frequency. The imaged image is learned. Rail fracture of train is decided from the imaged vibration data, based on the learning.

In an example, the imaged image may be spectrogram in which the relationship between time and frequency is illustrated based on the vibration data measured continuously in a predetermined time.

In an example, in the imaging the inputted vibration data, the vibration data may be wavelet-transformed and then may be imaged.

In an example, in learning the imaged image, machine learning in which convolution neural network (CNN) is sequentially used may be performed.

In an example, in the machine learning, a plurality of CNN blocks may be applied. In each CNN block, features may be revealed by cutting and scanning the image, whether the features are salient and strength of the features may be checked, and then a cut piece may be expressed as a large piece by selecting a maximum value representing a maximum strength as a representative value.

In an example, as the CNN blocks may be applied, a size of the image may decrease and the number of filters may increase, and then the number of features of the image to be decided may increase.

In an example, in the learning, the image of fractured rail and the image of normal rail may be learned. In the deciding rail fracture of the train, the image of the generated vibration data may be received to decide the rail fracture of the train.

According to the present example embodiments, when the rail fracture occurs, the rail fracture is decided using the vibration image of the relationship between time and frequency regardless of speed of the train, and thus the rail fracture may be decided more accurately.

Here, the vibration of the train is related to the speed of the train, and thus the position of the train which is to check the vibration according to the speed may be changed. However, conventionally, the changed position of the train is not considered and then a reference point for vibration data collection is determined, and thus the rail fracture may not be decided accurately. However, in the present example embodiment, the vibration image of the relationship between the time and the frequency instead of the vibration of the position, and thus the rail fracture may be decided more accurately.

Thus, an effect due to train speed and environment may be minimized, and the deciding position may not be changed according to the train speed, and thus the rail fracture may be decided more accurately.

### BRIEF DESCRIPTION OF THE DRAWINGS

FIG. 1 is a block diagram illustrating a detecting system for performing a method for detecting rail fracture according to the present example embodiment;
FIG. 2 is a flow chart illustrating the method for detecting rail fracture of FIG. 1;
FIG. 3 is an image showing an example result of imaging in the method of FIG. 2;
FIG. 4 is an image showing another example result of imaging in the method of FIG. 2;
FIG. 5 is a block diagram illustrating performing image learning in the method of FIG. 2;
FIG. 6 is a schematic diagram illustrating performing image learning of FIG. 5 in detail;
FIG. 7A and FIG. 7B are images showing examples of deciding that rail fracture does not occur in the method of FIG. 2; an d
FIG. 8A and FIG. 8B are images showing examples of deciding that rail fracture occurs in the method of FIG. 2.

### DETAILED DESCRIPTION

The invention is described more fully hereinafter with Reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. In the drawings, the size and relative sizes of layers and regions may be exaggerated for clarity.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the invention is described more fully hereinafter with reference to the accompanying drawings, in which embodiments of the invention are shown.

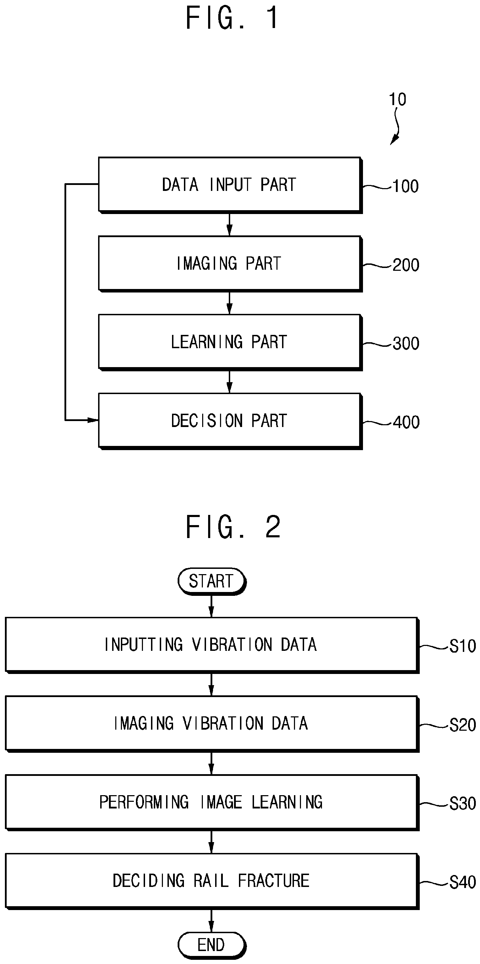

FIG. 1 is a block diagram illustrating a detecting system for performing a method for detecting rail fracture according to the present example embodiment. FIG. 2 is a flow chart illustrating the method for detecting rail fracture of FIG. 1.

Referring to FIG. 1 and FIG. 2, the method for detecting rail fracture according to the present example embodiment is performed by a detecting system 10. In the method, vibration data of a train is inputted by a data input part 100 (step S10). The vibration data of the train is collected using a distributed acoustic sensing (DAS) system or technology.

Here, the distributed acoustic sensing system or technology (hereinafter, DAS) is a technology in which vibration or shock information is extracted by using the phenomenon in which a specific waveform of an optical cable is distorted by events such as ambient noise or vibration. The technology is basically a coherence optical time domain reflectometer (C-OTDR), and in the technology, signals reflected by particles in the optical cable are analyzed over time to obtain vibration information near points by distance of the cable.

In the DAS, when an optical pulse having a frequency in a Rayleigh reflection band generated by a laser is incident on the optical cable, some hit the particles in the optical cable and are reflected and detected through a detector, while the others pass through the optical cable and proceed.

Here, when the particles of the optical cables are shaken under the influence of the vibration at the corresponding point, the size and the phase of the reflected waveform change accordingly. Then, based on the changes in magnitude and phase of the waveform, the magnitude and frequency information of the vibration applied to the corresponding point may be obtained.

Accordingly, using the DAS, the vibration data generated in train operation may be obtained, and the obtained vibration data is inputted into the data input part 100.

Here, in the case of the vibration data generated in the train operation, the main vibration data is generated in passing through the rail. In addition, the vibration data may be changed largely when the rail fracture or breakage occurs.

Thus, in the present example embodiment, the rail fracture is decided based on the vibration data obtained or collected by the DAS, and the detailed decision method is explained below.

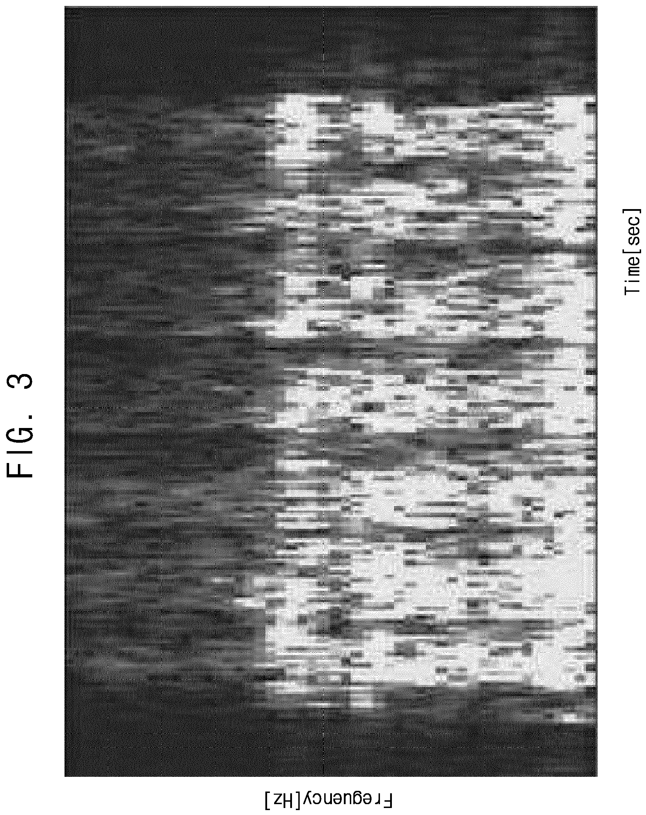

FIG. 3 is an image showing an example result of imaging in the method of FIG. 2.

Referring to FIG. 1, FIG. 2 and FIG. 3, when the vibration data of the train obtained using the DAS is inputted through the data input part 100, an imaging part 200 images the inputted vibration data into a relationship between time and frequency (step S20).

An example of the imaged image is illustrated in FIG. 3, and the image may be a 2-dimensional (2D) image.

As illustrated in FIG. 3, the imaging part 200 may image the vibration data into a spectrogram in which the relationship between the time and the frequency is shown.

Here, the vibration data is finally a data of the vibration continuously measured in a predetermined time as the train progresses, and thus as illustrated in FIG. 3, the vibration data may be imaged with the spectrogram.

When a horizontal axis is imaged as the time and a vertical axis as the frequency, the vibration data (signal) measured continuously in the predetermined time may be imaged to express a size of the signal at a specific time point as a color. For example, when the level of the vibration data is relatively low, it may be displayed in a relatively dark blue color, and when the level of the vibration data is relatively high, it may be displayed in a relatively bright green color or yellow color.

Here, the example image may be changed variously according as the color matching the vibration data is changed based on a setup of a color mapping.

Referring to the example imaging result in FIG. 3, considering the time axis (the horizontal axis), it may be seen that a portion with a large vibration and a portion with a small vibration appear repeatedly. This is because a difference occurs when a plurality of wheels passes a specific point and when the plurality of the wheels does not pass the specific point in the process of traveling on the rail.

Unlike, considering the frequency axis (the vertical axis), it may be seen that the magnitude of the vibration is large in the specific range. This may be used to decide whether or not the rail is broken or fractured.

Accordingly, when the vibration data obtained or collected by the DAS is imaged based on the time and the frequency, it may be used as the image to decide whether or not the rail is broken or fractured.

In the case of the imaging, imaging in other forms may be possible in addition to the imaging into the spectrogram illustrated in FIG. 3.

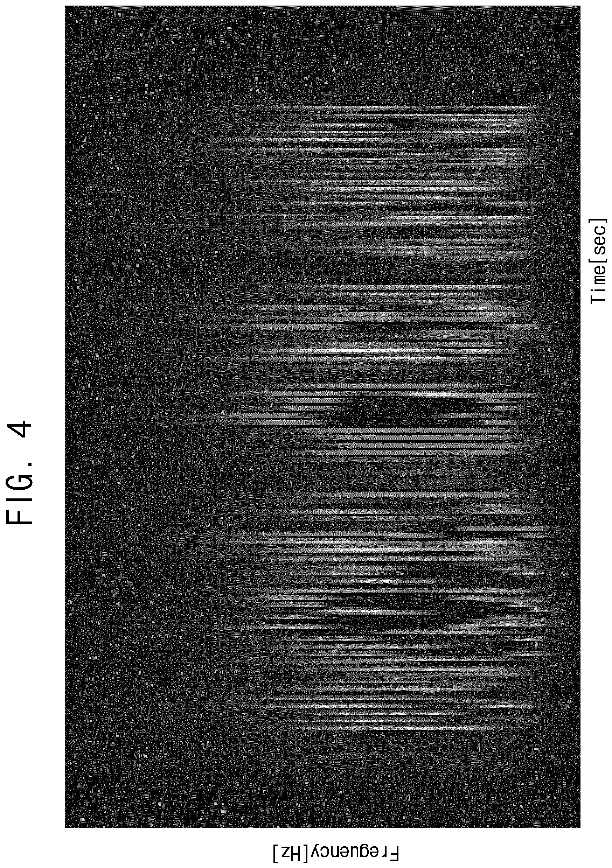

FIG. 4 is an image showing another example result of imaging in the method of FIG. 2.

As illustrated in FIG. 4, in the imaging part 200, the inputted vibration data may be imaged using wavelet transform.

Here, the wavelet transform technology is a method of adjusting the number of samples and weights for each frequency band of a signal so that the time and the frequency domains of interest are well expressed.

Thus, as illustrated in FIG. 4, the vibration data may also be imaged through the wavelet transformation with the time as the horizontal axis and the frequency as the vertical axis. The rail fracture may be decided in the image imaged through the wavelet transform.

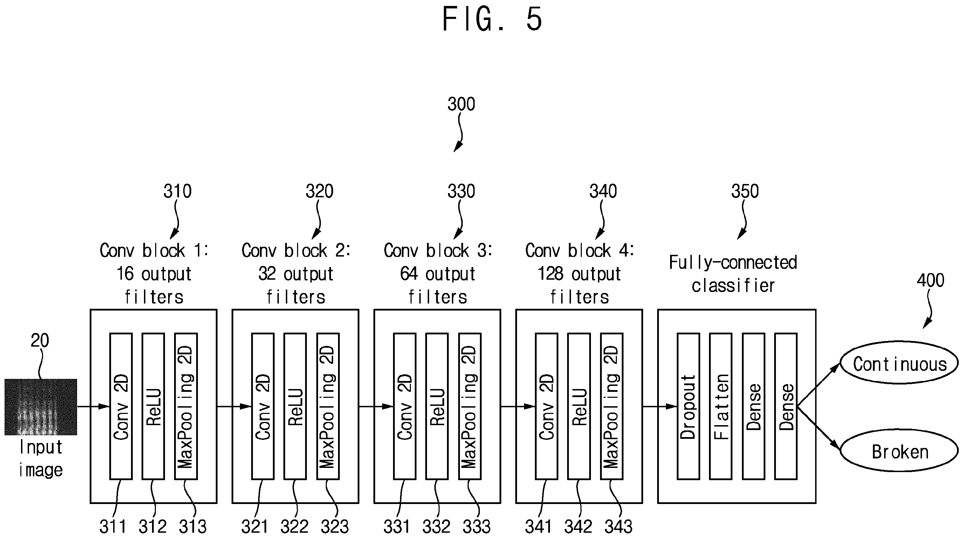

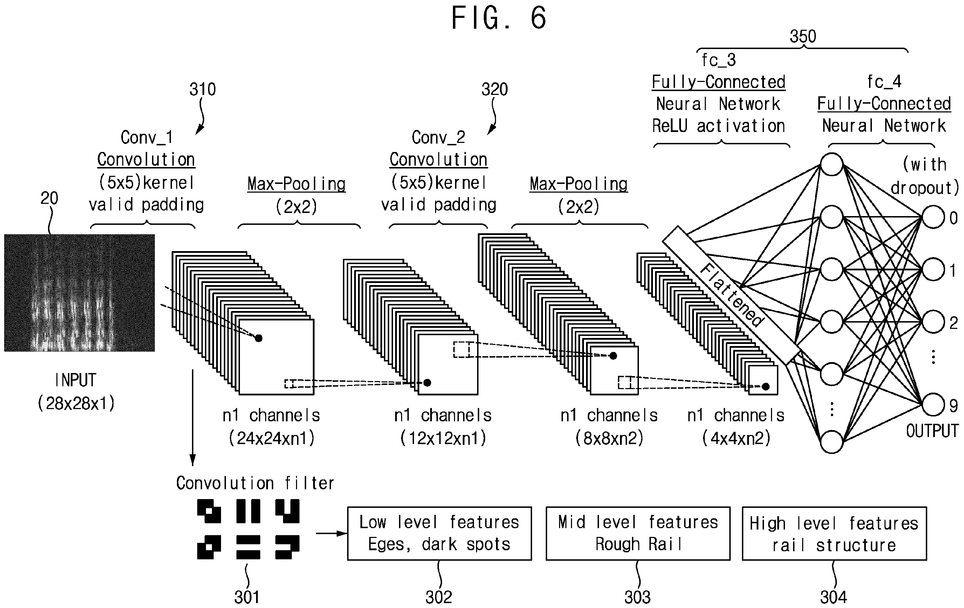

FIG. 5 is a block diagram illustrating performing image learning in the method of FIG. 2. FIG. 6 is a schematic diagram illustrating performing image learning of FIG. 5 in detail.

Referring to FIG. 1, FIG. 2 and FIG. 5, after the imaging part 200 images the inputted vibration data (step S20), a learning part 300 performs learning on the imaged image (step S30).

For the imaged image, characteristics of the overall image, which is characteristics of the image itself imaged in relation to time and frequency, should be determined, but this is difficult to characterize through a numeral approach.

Thus, in the present example embodiment, using the learning part 300, the characteristics of the image are extracted and then are learned.

For example, as illustrated in FIG. 5, the learning part 300 performs a machine learning which uses a convolution neural network (CNN) sequentially, and thus the learning part 300 includes a plurality of CNN blocks 310, 320, 330 and 340.

At a first CNN block 310, firstly, in a first Conv 2D 311, by cutting and scanning the image by little, features appearing on the image are revealed regardless of rotation or scaling of the image. Then, in a first ReLU 312, whether or not the feature has emerged, and if the feature has emerged, the strength of the corresponding feature, is checked.

Thus, in a first MaxPooling 2D 313, the fragments of the image decomposed in the first Conv 2D 311 are collected again and displayed as large fragments, and here, among the intensities of the features identified by the first ReLU 312, a maximum value is selected as a representative value.

The above machine learning step at the first CNN block 310, is repeated at next second CNN block 310 to fourth CNN block 340. At each CNN block, the size of the image is sequentially progressed from large to small, and the characteristics of the inputted image are identified. Here, the number of the CNN blocks may be selected variously.

In case that the characteristics of the inputted image is determined in each of the CNN blocks, the number of filters increases as the size of the image decreases from large to small, and then the number of features of the image to be discriminated is increased.

Thus, after the characteristics of the inputted image are extracted via passing through each of the CNN blocks, a classifier 350 finally classifies the characteristics of the image and the learning is finished.

The machine learning step at the learning part 300 is illustrated in detail in FIG. 6.

Referring to FIG. 6, for the image 20 inputted to the learning part 300, as explained above, the characteristics of the image 20 are extracted and then the learning is performed. Here, in the learning, the feature emerges via the CNN blocks, the strength is checked, and the representative value is selected. In the above process, the overall feature is extracted from the low-level filter by increasing the number of filters like a convolution filter (302), more specific features are extracted through the intermediate level filter (303), more accurate features are extracted though the high-level filter (304), and then the learning is performed.

Then, the classifier 350 classifies the characteristics of the extracted image, and the learning is finished.

In performing the learning on the image 20, the image of the normal rail and the image of the fractured rail are both used, and thus the characteristics of the image of the fractured rail should be extracted more accurately. This learning should be performed previously before deciding the fracture of the rail. The result of the previously performed learning is updated by the result of the learning actually deciding the fracture of the rail, and then the decision of the fracture of the rail on the image to be inputted later may be more accurate.

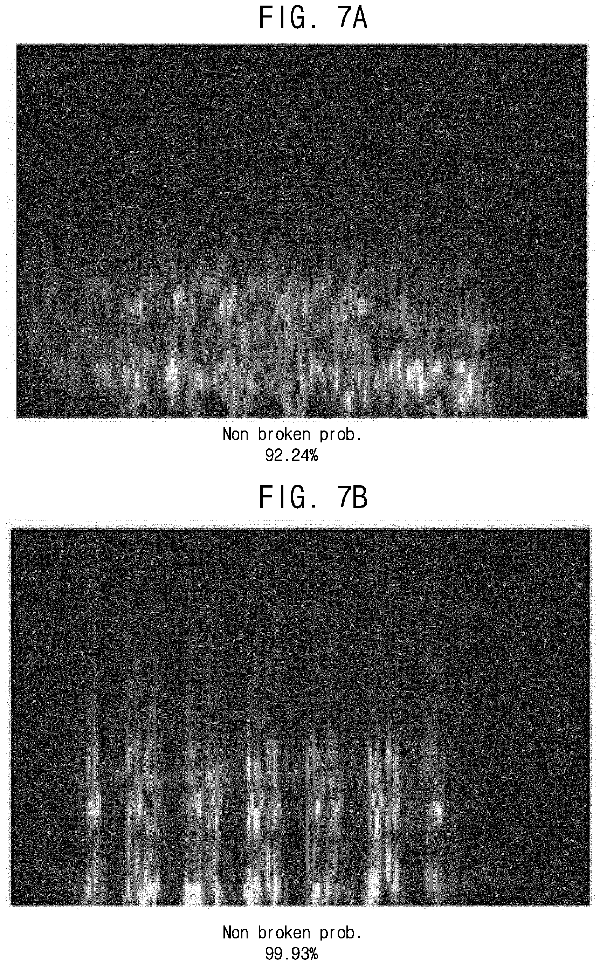

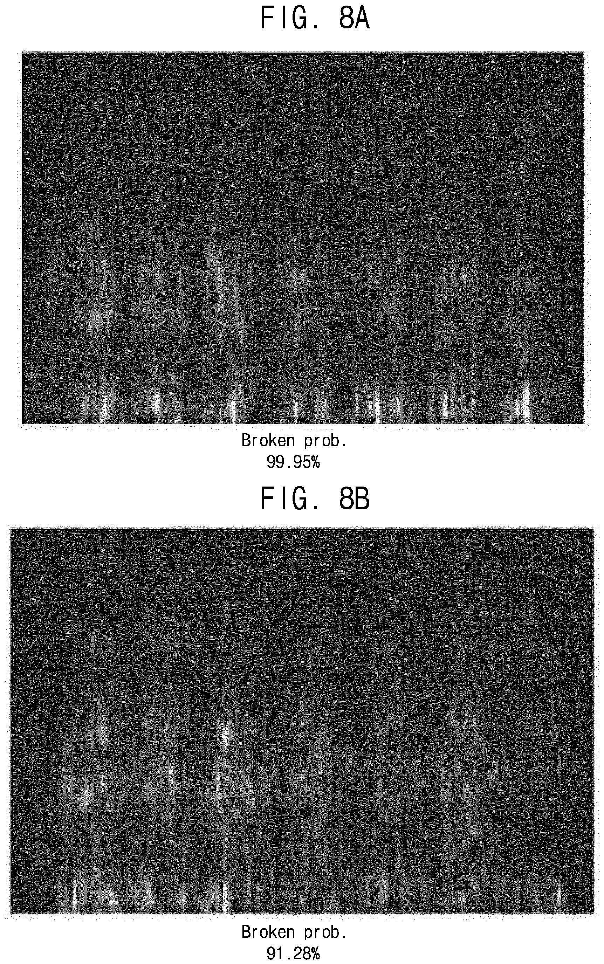

FIG. 7A and FIG. 7B are images showing examples of deciding that rail fracture does not occur in the method of FIG. 2. FIG. 8A and FIG. 8B are images showing examples of deciding that rail fracture occurs in the method of FIG. 2.

As explained above, based on the learning result on the image of the normal rail and the image of the fractured rail by the learning part 300, a decision part 400 decides whether the rail is fractured or broken or not (step S40).

For example, as a result of the learning by inputting the images of FIG. 7A and FIG. 7B, which are the images of the vibration data generated according to the train operation collected through the actual DAS system, to the learning part 300, the decision part 400 decides that the image of FIG. 7A has no breakage or fracture with a probability of 92.24% and the image of FIG. 7B has no breakage or fracture with a probability of 99.93%.

However, as a result of the learning by inputting the images of FIG. 8A and FIG. 8B to the learning part 300, the decision part 400 decides that the image of FIG. 8A has breakage or fracture with a probability of 99.95% and the image of FIG. 8B has breakage or fracture with a probability of 91.28%.

This is the results of deciding whether or not the rail is broken or fractured through the method for detecting rail fracture according to the present example embodiment, for the rail which is not actually broken or fractured and the rail which is actually broken or fractured. Accordingly, using the method according to the present example embodiment, the rail fracture or breakage may be decided with more than 90% accuracy.

According to the present example embodiment, when the rail fracture occurs, the rail fracture is decided using the vibration image of the relationship between time and frequency regardless of speed of the train, and thus the rail fracture may be decided more accurately.

Here, the vibration of the train is related to the speed of the train, and thus the position of the train which is to check the vibration according to the speed may be changed. However, conventionally, the changed position of the train is not considered and then a reference point for vibration data collection is determined, and thus the rail fracture may not be decided accurately. However, in the present example embodiment, the vibration image of the relationship between the time and the frequency instead of the vibration of the position, and thus the rail fracture may be decided more accurately.

Thus, an effect due to train speed and environment may be minimized, and the deciding position may not be changed according to the train speed, and thus the rail fracture may be decided more accurately.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

## Claims

1. A method for detecting rail fracture, comprising:
inputting vibration data generated according to train operation, wherein the vibration data is collected using a distributed acoustic sensing (DAS) system;
imaging the inputted vibration data into the relationship between time and frequency;
learning the imaged image; and
deciding rail fracture of train from the imaged vibration data, based on the learning.

2. The method of claim 1, wherein the imaged image is spectrogram in which the relationship between time and frequency is illustrated based on the vibration data measured continuously in a predetermined time.

3. The method of claim 1, wherein in the imaging the inputted vibration data, the vibration data is wavelet-transformed and then is imaged.

4. The method of claim 1, wherein in learning the imaged image, machine learning in which convolution neural network (CNN) is sequentially used is performed.

5. The method of claim 4, wherein in the machine learning, a plurality of CNN blocks is applied,
wherein in each CNN block, features are revealed by cutting and scanning the image, whether the features are salient and strength of the features are checked, and then a cut piece is expressed as a large piece by selecting a maximum value representing a maximum strength as a representative value.

6. The method of claim 5, wherein as the CNN blocks are applied, a size of the image decreases and the number of filters increases, and then the number of features of the image to be decided increases.

7. The method of claim 1, wherein in the learning, the image of fractured rail and the image of normal rail are learned,
wherein in the deciding rail fracture of the train, the image of the generated vibration data is received to decide the rail fracture of the train.
